# EUROPEAN PATENT APPLICATION

(11) **EP 4 614 254 A1**
(43) Date of publication of application: **10.09.2025**
(21) Application number: 23884856.8
(22) Date of filing: 30.10.2023
(51) Int. Cl.: G05B 19/418, G06F 9/44

(54) **CONTROL METHOD AND APPARATUS FOR AUTOMATIC SYSTEM, AND ELECTRONIC DEVICE AND STORAGE MEDIUM**

(30) Priority: 04.11.2022 CN 202211376186
(71) Applicant: Megarobo Technologies Co., Ltd., Beijing 102200 (CN)
(72) Inventor: ZHAO, Songtao, Beijing 102200 (CN); ZHANG, Caifeng, Beijing 102200 (CN)
(74) Representative: Hofmann, Matthias
(86) International application number: PCT/CN2023/127809
(87) International publication number: WO 2024/093926

(57) **Abstract**

Provided are a control method and apparatus for an automatic system, and an electronic device and a storage medium. The method comprises: in response to a trigger instruction of a user with respect to a device in an automatic system, displaying a first operable control (S110); in response to an operation of the user with respect to the first operable control, setting operation parameters of a pre-operation and/or a post-operation supported by the device (S120); and configuring a device node during a control process of the automatic system on the basis of the operation parameters of the pre-operation and/or the post-operation (S130). Therefore, a process interface is simpler, thereby effectively avoiding errors in an automatic process. Moreover, pre-operations and/or post-operations are all supported by a device, thereby effectively avoiding the situation where a control process cannot be normally executed because a device does not support a corresponding operation.

## Description

The present application claims priority to a Chinese Patent application No.202211376186.1, titled "CONTROL METHOD AND APPARATUS FOR AUTOMATIC SYSTEM, AND ELECTRONIC DEVICE AND STORAGE MEDIUM", filed on November 4, 2022 with the China National Intellectual Property Administration, which is incorporated herein by reference in its entirety.

### FIELD

The present disclosure relates to the field of automatic control, and in particular to a control method for an automatic system, a control apparatus for an automatic system, an electronic device and a storage medium.

### BACKGROUND

Currently, automation transformations are constantly performed in various fields to achieve the purposes of liberating human labor and improving efficiency. Automatic systems are extensively used in automated manufacturing, automated detection, automated testing and the like. Accordingly, the control process for an automatic system is constructed in advance.

In general, the construction of a control process is based on an automation management system. Users can construct the overall control process on an interface provided by the automation management system. For example, an arrangement order of steps in the process and devices for performing the steps are specified, so that the devices complete tasks as requested.

However, as the coverage of automation demands continues to expand, a large number of devices and steps are involved in a set of control process. Setting numerous steps in a control process takes a large amount of time and effort, and makes a process interface in disorder. These may lead to node errors in the constructed control process, thus causing the automated process to fail to be smoothly implemented.

### SUMMARY

In view of the above problem, the present disclosure is provided. According to an aspect of the present disclosure, a control method for an automatic system is provided. The control method includes: displaying a first operable control, in response to a trigger instruction for a device in the automatic system from a user; setting operation parameters of a pre-operation and/or a post-operation supported by the device, in response to an operation on the first operable control by the user, where the pre-operation is to be performed by an execution device of the pre-operation before the device is controlled to perform a main operation, and the post-operation is to be performed by an execution device of the post-operation after the device is controlled to perform the main operation; and configuring a device node in a control process of the automatic system based on the operation parameters of the pre-operation and/or the post-operation.

In an embodiment, the first operable control includes a menu, and the menu is configured to provide the operation parameters of the pre-operation and/or the post-operation supported by the device for selection by the user.

In an embodiment, the control method further includes: parsing the control process into a series of sequentially arranged operations based on device node information and an order of device nodes in the control process, where the device node information includes the operation parameters of the pre-operation and/or the post-operation; determining, based on the parsed result, a device work division and an execution time corresponding to each operation of the sequentially arranged operations; and performing the sequentially arranged operations based on the determined result.

In an embodiment, the determining, based on the parsed result, a device work division and an execution time corresponding to each operation of the sequentially arranged operations includes: determining, based on the parsed result, whether at least one operation of a post-operation of a device is identical to one operation of a pre-operation of a next device in the control process; and for each operation of the at least one identical operation, determining a device work division and an execution time corresponding to the operation based on a corresponding pre-operation of a next device.

In an embodiment, the determining, based on the parsed result, a device work division and an execution time corresponding to each operation of the sequentially arranged operations includes: determining, based on the parsed result, whether a pre-operation and a post-operation of different devices in the control process are capable of simultaneous performance; and determining the pre-operation and the post-operation capable of simultaneous performance to be performed simultaneously.

In an embodiment, the control method further includes: displaying a user interface in response to a pre-operation and post-operation editing instruction from the user. The user interface includes an operation display area and a third operable control. The operation display area is configured to display all pre-operations and/or post-operations supported by a currently edited device. The third operable control is configured to adjust, in response to the currently edited device configured with multiple pre-operations, an execution order of the multiple pre-operations and/or to adjust, in response to the currently edited device configured with multiple post-operations, an execution order of the multiple post-operations.

In an embodiment, the displaying a first operable control, in response to a trigger instruction for a device in the automatic system from a user includes: displaying the first operable control, in response to a trigger operation on a device node in a constructed control process by the user.

In an embodiment, the displaying a first operable control, in response to a trigger instruction for a device in the automatic system from a user includes: displaying a second operable control, where the second operable control is configured to set a device parameter of a device in the automatic system; and displaying the first operable control, in response to an operation on the second operable control by the user.

In an embodiment, the pre-operation and/or the post-operation includes one or more of: sample plate-in, sample plate-out, sample plate orienting, door opening, and door closing.

According to another aspect of the present disclosure, a control apparatus for an automatic system is further provided. The control apparatus includes a display module, a setting module, and a configuration module.

The display module is configured to display a first operable control, in response to a trigger instruction for a device in the automatic system from a user.

The setting module is configured to set operation parameters of a pre-operation and/or a post-operation supported by the device, in response to an operation on the first operable control by the user.

The configuration module is configured to configure a device node in a control process of the automatic system based on the operation parameters of the pre-operation and/or the post-operation.

The pre-operation is to be performed by an execution device of the pre-operation before the device corresponding to the device node is controlled to perform a main operation, and the post-operation is to be performed by an execution device of the post-operation after the device corresponding to the device node is controlled to perform the main operation.

According to another aspect of the present disclosure, an electronic device is further provided. The electronic device includes a processor and a memory. The memory stores computer program instructions, and the computer program instructions, when being executed by the processor, perform the control method for the automatic system as described above.

According to another aspect of the present disclosure, a storage medium is further provided. The storage medium stores program instructions. The program instructions, when being executed, perform the control method for the automatic system as described above.

According to the above technical solutions, during the configuration of the control process, some devices in the automatic system are pre-configured with pre-operations and/or post-operations supported by the devices, without adding separate nodes for these pre-operations and post-operations in a process construction interface, thereby simplifying the process interface, effectively preventing errors in the automatic process, and reducing the time and energy consumption of the personnel. Thus, the smooth implementation of the automatic process is also effectively ensured. Moreover, these pre-operations and/or post-operations are all supported by the devices, effectively avoiding that the control process fails to be performed normally because the device does not support the operation.

The above description is merely an overview of the technical solutions of the present disclosure. Embodiments of the present disclosure are described hereinafter in order for a clear understanding of the technical solutions of the present disclosure so as to implement the technical solutions based on the specification, and further for a clear and easy understanding of the above and other objectives, features and advantages of the present disclosure.

### BRIEF DESCRIPTION OF THE DRAWINGS

Above and other objects, features, and advantages of the present disclosure will become more apparent with reference to the detailed description of the embodiments of the present disclosure made in conjunction with the drawings. The drawings are intended to provide further understanding of the embodiments of the present disclosure, and constitute a part of the specification. The drawings are intended to describe the present disclosure in conjunction with the embodiments of the present disclosure, and do not limit the present disclosure. In the drawings, same reference numerals generally represent same parts or steps.
FIG. 1 illustrates a flowchart of a control method for an automatic system according to an embodiment of the present disclosure;
FIG. 2 illustrates a schematic diagram of a user issuing a trigger instruction according to an embodiment of the present disclosure;
FIG. 3 illustrates a flowchart of determining a device work division and an execution time corresponding to each operation of sequentially arranged operations based on a parsed result according to an embodiment of the present disclosure;
FIG. 4 illustrates a flowchart of determining a device work division and an execution time corresponding to each operation of sequentially arranged operations based on a parsed result according to another embodiment of the present disclosure;
FIG. 5 illustrates a schematic diagram of execution timing of operations in a parsed result according to an embodiment of the present disclosure;
FIG. 6 illustrates a schematic block diagram of a control apparatus for an automatic system according to an embodiment of the present disclosure; and
FIG. 7 illustrates a schematic block diagram of an electronic device according to an embodiment of the present disclosure.

### DETAILED DESCRIPTION

Exemplary embodiments of the present disclosure are described in detail with reference to the drawings to make purposes, technical solutions, and advantages of the present disclosure more apparent. Apparently, the described embodiments are only a part of the embodiments instead of all embodiments of the present disclosure. It should be understood that, the present disclosure is not limited by the exemplary embodiments described herein. Based on the embodiments of the present disclosure described herein, all other embodiments obtained by those skilled in the art without creative efforts are deemed to fall into the scope of protection of the present disclosure.

As described above, automatic systems are used in an increasing number of application scenarios, such as automated manufacturing, automated detection, and automated testing, so as to improve work efficiency. It can be understood that the automatic system may include multiple automatic control devices configured to perform respective operations. Among these operations, some operations are main operations for implementing a control process. For example, for a testing process, chemical or physical testing operations are the main operations. Other operations are auxiliary operations for ensuring the smooth implementation of the main operations. The testing process is taken as an example, carrying a sample container between different devices in an automatic system is an auxiliary operation. All operations are implemented by corresponding devices, where different operations may be implemented by a same device or different devices. Setting a node for each operation in the control process causes time and energy consumption of personnel and is prone to errors.

A pipetting workstation in an automatic testing system is taken as an example, and it can be understood that a main operation of the pipetting workstation is a pipetting operation. An entrance plate position is provided at the outside of the pipetting workstation. During the testing process, after a step of a previous device node is performed, a robotic arm places a sample plate to be pipetted onto the entrance plate position of the pipetting workstation. The pipetting workstation transfers the sample plate from the entrance plate position to a working area inside the workstation independently (that is, implements a plate-in operation). In the conventional testing management system, it is required to set a separate action node corresponding to the plate-in operation to a visual interface constructed in the testing process. If the personnel forget to set the node corresponding to the plate-in operation when constructing the testing process, the system does not set an execution time for the plate-in operation and does not issue a separate instruction of performing the plate-in operation during the testing process. Instead, upon the robotic arm placing the sample plate at the entrance plate position of the pipetting workstation, the pipetting workstation is scheduled to perform a pipetting operation. In this case, the sample plate is not located in the working area within the pipetting workstation, thus resulting in an experiment failure.

In order to solve the above technical problem, a control method for an automatic system is provided according to the present disclosure. Based on the control method, in a control process of the automatic system, a device node is set only for a device performing the above-described main operation, and an auxiliary operation is configured as a pre-operation and a post-operation of the device for performing the main operation, for which no separate node is set.

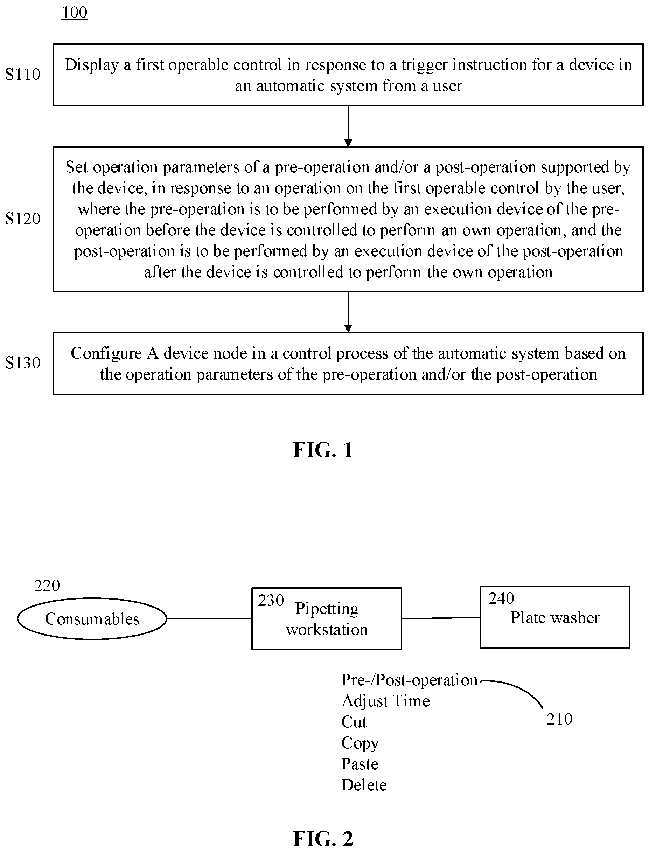

FIG. 1 illustrates a flowchart of a control method 100 for an automatic system according to an embodiment of the present disclosure. As shown in FIG. 1, the control method 100 includes the following steps S110 to S130.

In step S110, in response to a trigger instruction for a device in an automatic system from a user, a first operable control is displayed.

In an embodiment, a host computer provides a visual interface for the user. Based on the visual interface, the user issues a trigger instruction for any one device in the automatic system by using an input device (such as a mouse, a keyboard and the like) of the host computer. The device is configured to perform the main operation in the control process. In response to the trigger instruction for the device, a first operable control, also for the device, is displayed on the visual interface. For example, in response to the trigger instruction, a user interface including the first operable control is displayed.

In step S120, in response to an operation on the first operable control by the user, operation parameters of a pre-operation and/or a post-operation supported by the device are set. In addition to the main operation performed by the device being related to the device, the device supports some auxiliary operations, the pre-operation and post-operation, and these auxiliary operations are also related to the device. The pre-operation is to be performed by an execution device of the pre-operation before the device supporting the pre-operation is controlled to perform a main operation, and the post-operation is to be performed by an execution device of the post-operation after the device supporting the post-operation is controlled to perform the main operation. It can be understood that the execution device of the pre-operation and/or the post-operation may be the same as, different from, or a part of the device supporting the operations.

In an embodiment, the operation parameters of the pre-operation include a name of the execution device of the pre-operation and a pre-operation instruction. The operation parameters of the post-operation include a name of the execution device of the post-operation and a post-operation instruction.

In an embodiment, a user interface is displayed in response to the trigger instruction described in the above step S110. The user interface may include a first operable control. The first operable control includes a "Device" control and an "Operation or Operation Group" control. The user enters a name of an execution device for performing a pre-operation or a post-operation into a text box of the "Device" control via a keyboard. Correspondingly, the user may enter a pre-operation instruction or a post-operation instruction which the above-mentioned execution device is capable of executing into a text box of the "Operation or Operation Group" control via a keyboard.

In another embodiment, in the user interface including the first operable control, the first operable control includes a menu. The menu is configured to provide the operation parameters of the pre-operation or post-operation supported by the device for selection by the user. The menu includes a "Device" menu and an "Operation or Operation Group" menu. The user clicks on an operable control after the "Device" menu with the mouse. For example, the operable control may be an arrow. In response to the clicking operation of the user, a menu of execution devices is displayed. The user selects a desired execution device from the menu of execution devices. Further, the user clicks an arrow after the "Operation or Operation Group" menu. In response to the clicking operation of the user, a menu of a pre-operation instruction or a post-operation instruction which the selected execution device is capable of executing is displayed.

In the embodiment, the first operable control is presented to the user in the form of a menu. Based on the menu, the user directly selects a desired operation parameter therein, simplifying the operation and reducing the workload of the user.

In step S130, a device node in a control process of the automatic system is configured based on the operation parameters of the pre-operation and/or post-operation.

Based on the operation parameters of the pre-operation and/or the post-operation set in step S120, the device node is configured to be associated with the pre-operation and/or the post-operation. In other words, device node information includes not only operation parameters of the main operation performed by the device corresponding to the node, but further include operation parameters of the pre-operation and/or operation parameters of the post-operation. For example, the user sets operation parameters of a pre-operation and operation parameters of a post-operation for a device. When the control process is executed to this device node, firstly, an execution device of the pre-operation is controlled to execute an operation instruction of the pre-operation. Next, a device corresponding to the device node is controlled to execute a main operation instruction. Finally, an execution device of the post-control operation is controlled to execute an operation instruction of the post-operation.

According to the above technical solutions, during the configuration of the control process, some devices in the automatic system are pre-configured with pre-operations and/or post-operations supported by the devices, without adding separate nodes for these pre-operations and post-operations in a process construction interface, thereby simplifying the process interface, effectively preventing errors in the automatic process, and reducing the time and energy consumption of the personnel. Thus, the smooth implementation of the automatic process is also effectively ensured. Moreover, these pre-operations and/or post-operations are all supported by the devices, effectively avoiding that the control process fails to be performed normally because the device does not support the operation.

In an embodiment, an automatic system is an automated testing system for testing of a sample, in which a sample plate is configured to carry a sample container, and the sample container is configured to accommodate the sample. A pre-operation and/or a post-operation in the automated testing system includes one or more of the following operations: sample plate-in, sample plate-out, sample plate orienting, door opening, and door closing.

For example, a device corresponding to the device node is a pipetting workstation. As described earlier, before performing a main operation, the pipetting workstation places the sample plate in a pipetting operation area in the pipetting workstation, that is, the working area. Therefore, a pre-operation, sample plate-in, is configured. The sample plate-in may refer to an operation of moving the sample plate from the entrance plate position to the pipetting operation area by a transfer module inside the pipetting workstation. Then the pipetting workstation performs a pipetting operation. After the pipetting operation, a post-operation, sample plate-out, is configured for the pipetting workstation in a similar manner. The sample plate-out may refer to an operation of moving the sample plate from the pipetting operation area to an exit plate position of the pipetting workstation by the transfer module inside the pipetting workstation.

For example, some devices have special requirements for the orientation and/or clamping direction, and the like of a sample plate when the sample plate is fed into the device. For such devices, sample plate orienting may be configured as a pre-operation which is configurable for the user. The user sets an orientation angle as desired. Preferably, eight optional orientation angles may be pre-set before delivery, and the eight optional orientation angles correspond to eight values. Thereby, an operation instruction for orienting the sample plate may further include a value selected by the user.

For example, a device, such as an incubator, a centrifuge and the like, may be provided with a door that separates an inner space from an outer space of the device. For the device, door opening may be configured as a pre-operation which is configurable for the user, and door closing may be configured as a post-operation which is configurable for the user.

It can be understood that configuring the pre-operation and/or post-operation supported by the devices for the above-described devices is merely exemplary and does not imply a limitation of the present disclosure.

In general, different devices are included in the automated testing system. These devices have main operation tasks, and clear requirements are provided for the sample plates operated by the devices and states of the devices in order to implement their main operation tasks. Pre-operations and/or post-operations are configured corresponding to different requirements of the devices, thereby ensuring smooth execution of the constructed testing process.

In an embodiment, step S110, the displaying a first operable control in response to a trigger instruction for a device in an automatic system from a user may include: displaying the first operable control in response to the trigger operation on a device node in a constructed control process by the user.

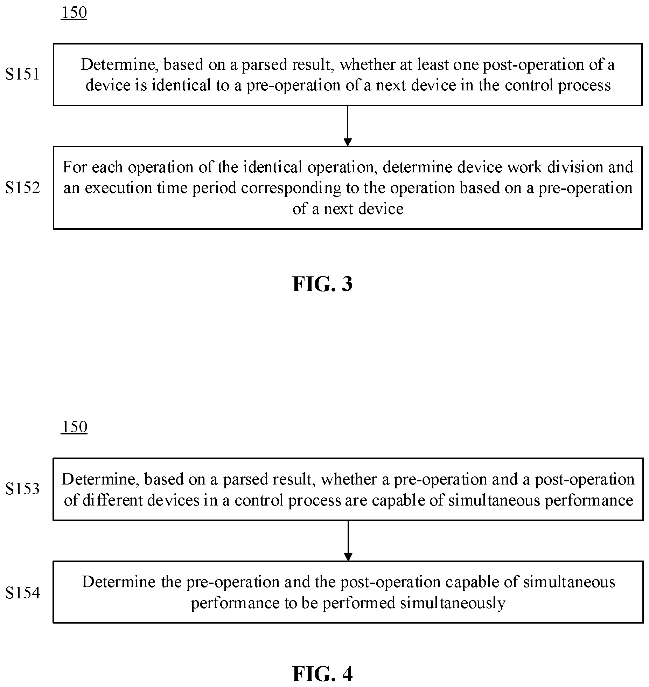

FIG. 2 illustrates a schematic diagram of a user issuing a trigger instruction according to an embodiment of the present disclosure. A constructed control process is illustrated in FIG. 2. Moreover, the control process includes three device nodes. The user clicks on a device node for which the user needs to configure a pre-operation and/or a post-operation by right-clicking the mouse. In an embodiment shown in FIG. 4, the user determines to configure a pre-operation and/or a post-operation for a second device node. Upon clicking on the device node by right-clicking the mouse, a list as shown in FIG. 2 is displayed. Then the user clicks on a "Pre/post-operation" control 210 in the list to issue a trigger instruction. In response to the trigger instruction on the device in the automatic system from the user, the first operable control is displayed.

As a result, the first operable control is displayed directly through controlling the device nodes in the control process during or after the construction of the control process. Moreover, the above operation is simple and facilitates the user operating.

In another embodiment, step S110, the displaying a first operable control in response to a trigger instruction for a device in an automatic system from a user may include the following steps.

First, a second operable control is displayed. The second operable control is configured to set a device parameter of a device in the automatic system. It can be understood that the second operable control may be one or more in number, which may be displayed in the same user interface or in various user interfaces. In an embodiment, a user interface including the second operable control may further include a list of devices in the automatic system. The user selects a device for which the user needs to configure a pre-operation and/or a post-operation from the list of devices in the automatic system by using the mouse. It is assumed that the device selected by the user is a pipetting workstation. In response to the device selection operation of the user, a "Condition setting" table is displayed on the right side of the list of devices in the automatic system, where the table includes some of the second operable controls. Next, the first operable control is displayed in response to an operation on the second operable control by the user. For example, the user clicks on an "Edit" control in the second operable control with the mouse to display another user interface. The first operable control is displayed in response to the trigger operation on the "Edit" control by the user.

Therefore, before the construction of the control process, first operable controls corresponding to different devices in the automatic system may be displayed, so as to configure corresponding pre-operations and/or post-operations for the devices. Further, the control process is constructed directly based on the device configured with a pre-operation and/or a post-operation, improving the construction efficiency.

In an embodiment, the configured pre-operation and/or post-operation is editable. The control method may further include displaying a user interface in response to a pre-operation and post-operation editing instruction from the user. The user interface includes an operation display area and a third operable control. The operation display area is configured to display all pre-operations and/or post-operations supported by a device that is currently edited. The third operable control is configured to adjust, when the currently edited device is configured with multiple pre-operations, an execution order of the pre-operations, and/or to adjust, when the device is configured with multiple post-operations, an execution order of the post-operations.

In an embodiment, the pre-operation and post-operation editing instruction may be issued in response to an operation on the second operable control by the user. In an embodiment, the user selects a device for which the user needs to configure a pre-operation and/or a post-operation from the list of devices in the automatic system by using the mouse. Then the user clicks on the "Edit" control in the second operable control to trigger the pre-operation and post-operation editing instruction. In response to the pre-operation and post-operation editing instruction, a user interface including a third operable control is displayed. In this embodiment, the user interface including the third operable control may further include the aforementioned second operable control. In response to the pre-operation and post-operation editing instruction, a user interface including an operation display area and the third operable control is displayed. All pre-operations or post-operations of the currently selected device are displayed in the operation display area. The following description is provided based on an example of adjusting the execution order of all the pre-operations of the currently selected device. For example, the execution order of all the pre-operations of the currently selected device may be adjusted by using an "Up" control and a "Down" control in the third operable control. Specifically, the user first selects a pre-operation for which the user needs to adjust the execution order from all the pre-operations of the currently selected device. Clicking the "Up" control once means adjusting the execution order of the selected pre-operation one step forward, that is, advancing the execution of the selected pre-operation to before the immediately previous pre-operation. Clicking the "Up" control twice means adjusting the execution order of the selected pre-operation two steps forward, that is, advancing the execution of the selected pre-operation to before the immediately previous two pre-operations. Similarly, clicking the "Down" control once means adjusting the execution order of the selected pre-operation one step backward, that is, delaying the execution of the selected pre-operation to after the next pre-operation. Clicking the "Down" control twice means adjusting the execution order of the selected pre-operation two steps backward, that is, delaying the execution of the selected pre-operation to after the next two pre-operations. It can be understood that the "Up" control is not available when the selected pre-operation is in the first row. The "Down" control is not available when the selected pre-operation is in the last row. When the selected device is configured with one pre-operation, neither the "Up" control nor the "Down" control is available.

In an embodiment, the pre-operation and/or post-operation may include one or more individual operations and/or one or more operation groups. The operation group may be edited in its entirety as an editing unit, or operations within the operation group may be edited separately. For example, the pre-operation includes both an individual operation and an operation group. The execution order between the individual operation and the operation group may be adjusted. The execution order of the operations within the operation group may also be adjusted.

As a result, the user can customize and edit the execution order of the pre-operations and/or the post-operations of the device as desired. Requirements of different users are satisfied, and flexibility of the control process is ensured.

In an embodiment, in response to the pre-operation and post-operation editing instruction, the displayed user interface may further include a "Set Default" control, a "Delete" control and an "Edit" control. The "Set Default" control is configured to restore all settings for the currently activated operation to a system default configuration. The system default configuration may be pre-set based on experience and is not limited herein. Preferably, a prompt window is displayed after the user clicks on the "Set Default" control to prevent the user from misoperation. For example, the prompt window may include a text prompt "Please confirm whether to restore the default configuration". Furthermore, the prompt window may further include a confirmation control and a cancel control. The confirmation control is configured to confirm the operation of restoring the default configuration. The cancel control is configured to cancel restoring the default configuration. The "Delete" control is configured to delete an operation selected by the user. The "Edit" control is configured to edit the operation selected by the user, such as changing operation parameters of the operation.

In an embodiment, the user first selects an operation group in the operation display area, and then clicks on the "Edit" control to display an intra-group editing interface of the operation group. In an embodiment, the intra-group editing interface of the operation group includes an intra-group operation display area and a fourth operable control. The fourth operable control includes an "Up" control, a "Down" control, a "Set Default" control, an "Add" control, a "Delete" control, and an "Edit" control. The "Up" and "Down" controls are configured to adjust an execution order of operations in a current intra-group operation display area in response to an operation of the user. The "Set Default" control is configured to restore all settings in this operation group to the system default configuration. The "Add" control is configured to add a new operation to the operation group. The "Delete" control is configured to delete an operation in the operation group that is selected by the user. The "Edit" control is not available in the intra-group editing interface. Specific functional implementations of these controls have been described in detail above and will not be repeated here for brevity.

In an embodiment, after the device node is configured in step S130, the control method may further include steps S140, S150, and S160.

In step S140, based on the device node information and an order of the nodes in the control process, the control process is parsed into a series of sequentially arranged operations. The device node information includes operation parameters of a pre-operation and/or a post-operation.

Referring to FIG. 2, the constructed control process shown in FIG. 2 includes three device nodes, and the order of the device nodes is provided. It can be understood that a line connecting two adjacent device nodes indicates that there is a transfer operation for a to-be-operated component (for example, the aforementioned sample plate) between the two device nodes. An arrow of the line represents a direction of the transfer operation, that is, an order in which the nodes are executed. The control process is parsed into a series of sequentially arranged operations based on the operation parameters of the pre-operation, the operation parameters of a main operation of the device corresponding to the device node, and the operation parameters of the post-operation, and the order of the device nodes included in the device node information. In the control process in the embodiment shown in FIG. 2, a first node is a consumable node 220, which is not a device node and is not configured with a supported pre-operation or post-operation. The series of sequentially arranged operations obtained by parsing the control process includes, in sequence: a pre-operation of a device node 230, a main operation of a device corresponding to the device node 230, a post-operation of the device node 230, a pre-operation of a device node 240, a main operation of a device corresponding to the device node 240, and a post-operation of the device node 240. In an embodiment, the device corresponding to the device node 230 is a pipetting workstation. The device corresponding to the device node 240 is a plate washer. The pipetting workstation is configured with pre-operations including sample plate transfer and sample plate-in. The main operation of the pipetting workstation is pipetting. In addition, the pipetting workstation is configured with post-operations including sample plate-out and sample plate transfer. The plate washer is not configured with a pre-operation or post-operation. The main operation of the plate washer is to perform plate washing. As a result, in the embodiment, the series of sequentially arranged operations obtained by parsing are, in sequence: sample plate transfer, sample plate-in, pipetting, sample plate-out, sample plate transfer, and plate washing.

In step S150, based on the parsed result, a device work division and an execution time corresponding to each operation of the sequentially arranged operations are determined.

Based on the series of sequentially arranged operations obtained in step S140 described above, an execution device of each operation is determined. An execution time for the execution device to perform an operation is further determined. The determined result for the sequentially arranged operations is obtained and includes, in sequence: sample plate transfer for 30 seconds, sample plate-in operation of the pipetting workstation for 10 seconds, pipetting operation of the pipetting workstation for 60 seconds, sample plate-out operation of the pipetting workstation for 10 seconds, sample plate transfer for 30 seconds, and plate washing operation of the plate washer for 30 seconds.

In step S160, based on the determined result, the series of sequentially arranged operations are performed.

Based on the determined result obtained in step S150 described above, the devices in the automatic system may execute the operations in sequence.

In the embodiment, the device nodes configured with the pre-operations and/or post-operations are parsed into sequential operations that are executable by the automatic system, ensuring sequential and smooth execution of the control process.

FIG. 3 illustrates a flowchart of determining a device work division and an execution time corresponding to each operation of sequentially arranged operations based on a parsed result according to an embodiment of the present disclosure. As shown in FIG. 3, step S150 may include the following steps S151 to S153.

**In** step S151, based on a parsed result, it is determined whether at least one operation of a post-operation of a device is identical to one operation of a pre-operation of a next device in the control process.

As described above, the parsed result includes a series of sequentially arranged operations, for example: transfer, sample plate-in, pipetting, sample plate-out, transfer, plate washing. It can be understood that multiple pre-operations and/or multiple post-operations may be configured for one device. Based on the parsed result, it is determined whether at least one post-operation of all the post-operations of a device is identical to a pre-operation of all the pre-operations of a next device in the control process. Identical operations may refer to operations where the execution devices, the operation instructions, and the execution time are identical.

In step S152, for each operation of the at least one post-operation, a device work division and an execution time corresponding to the operation is determined based on a pre-operation of a next device.

In an embodiment, a parsed result of all relevant operations of a pipetting workstation includes, in sequence: transfer, sample plate-in, pipetting, sample plate-out, and transfer. A parsed result of all relevant operations of an incubator, which is the next device of the pipetting workstation, includes, in sequence: transfer, sample plate-in, incubating, and sample plate-out. It can be understood that in the parsed results of the control process, the relevant operations of the pipetting workstation are followed by the relevant operations of the incubator. The pipetting workstation is configured with two post-operations, sample plate-out and transfer. The incubator is configured with one pre-operation, transfer. As an immediately previous device of the incubator, the pipetting workstation is configured with a post-operation identical to the pre-operation of the incubator, where the post-operation is transfer. Further, a robotic arm and an execution time for performing transfer are determined based on the pre-operation of the incubator. For example, in a case that an end position of a transfer operation by the robotic arm of the post-operations of the pipetting workstation is set as an "Termination Position" (indicating the termination position of the operation), and an end position of the transfer by the robotic arm in the incubator is an entrance plate position of the incubator, the terminating position set for the pipetting workstation is overridden by the entrance plate position of the incubator.

As a result, in a case that at least one post-operation of a device is identical to a pre-operation of a next device, the identical operations may be merged as one operation for execution, reducing execution steps of the control process, and thus making the control process executed smoothly. Moreover, the device work division and the execution time of the operation are determined based on the pre-operation of the next device, thus ensuring accurate and efficient execution of the operation.

FIG. 4 illustrates a flowchart of step S150 of determining a device work division and an execution time corresponding to each operation of the sequentially arranged operations based on a parsed result according to another embodiment of the present disclosure. As shown in FIG. 4, step S150 may include steps S153 and S154.

In step S153, based on a parsed result, it is determined whether a pre-operation and a post-operation of different devices in the control process are capable of simultaneous performance. In step S154, the pre-operation and the post-operation capable of simultaneous performance are determined to be performed simultaneously.

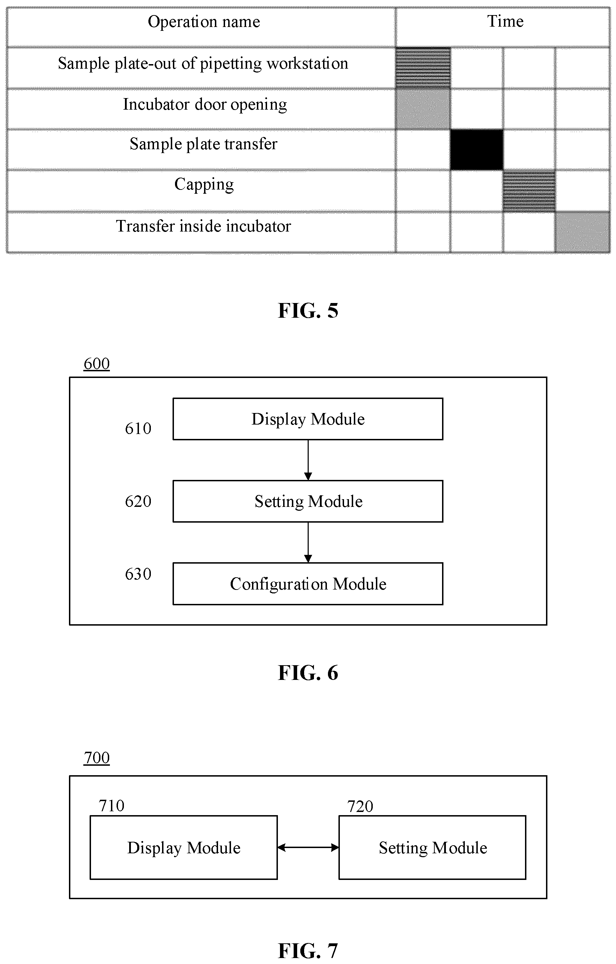

FIG. 5 illustrates a schematic diagram of execution timing of operations in a parsed result according to an embodiment of the present disclosure, in which a horizontal rightward direction of the table represents the passage of time. FIG. 5 is only used to illustrate a sequential order of execution of the operations, and the horizontal length of each cell in the table does not represent the duration of the execution time of the operation. In an embodiment, relevant operations of the device node, the pipetting workstation, include sample plate-out, sample plate transfer, and sample capping. Relevant operations of the device node, the incubator, include door opening, sample plate transfer, and transfer inside the incubator. According to the foregoing, in the case that a post-operation of a device is identical to a pre-operation of a next device, the device work division and the execution time corresponding to the identical operation may be determined based on the pre-operation of the next device. In this embodiment, one post-operation of the post-operations of the pipetting workstation is identical to the pre-operation of the incubator, which is the transfer operation of the sample plate. As a result, the end position of the robotic arm transfer in an operation instruction for sample plate transfer of the incubator is determined as an end position of the sample plate transfer. During the actual execution of the control process, the operation of sample plate transfer is performed once. In the embodiment shown in FIG. 5, a pre-operation of the pipetting workstation and a post-operation of the incubator can be performed simultaneously. A criterion for determining whether the pre-operation and the post-operation of different devices in the control process are capable of simultaneous performance may include that: execution devices corresponding to the two operations are different, and performing relevant operations simultaneously by the execution devices does not affect the execution of the control process. In this embodiment, a sample plate-out operation of the pipetting workstation is performed by a transfer module inside the pipetting workstation. The door opening operation of the incubator is performed by the robotic arm of the automatic system. Thus, the sample plate-out operation of the pipetting workstation and the door opening operation of the incubator are determined as operations capable of simultaneous performance. Referring to FIG. 5, the operations capable of simultaneous performance, that is, the sample plate-out operation of the pipetting workstation and the door opening operation of the incubator, have a same execution time.

Based on a determination result in step S153, an execution order of the control process may be determined. In the embodiment shown in FIG. 5, the execution order of the control process may be as follows. Sample plate-out operation of the pipetting workstation and door opening operation of the incubator are performed simultaneously, and then sample plate transfer, sample capping, transfer inside the incubator are performed sequentially. In this embodiment, the sample plate transfer operation of the pipetting workstation and the sample plate transfer operation of the incubator are merged to be performed. That is, the sample plate is directly transferred from the exit plate position of the pipetting workstation to the entrance plate position of the incubator. The sample capping operation on the sample plate is performed during or after the transfer. As a result, the execution steps of the control process are simplified.

Therefore, when operations capable of simultaneous performance among pre-operations and post-operations of different devices, the operations are performed in parallel, thereby improving execution efficiency of the control process.

According to another aspect of the present disclosure, a control apparatus for an automatic system is also provided. FIG. 6 illustrates a schematic block diagram of a control apparatus 600 for an automatic system according to an embodiment of the present disclosure. As shown in FIG. 6, the control apparatus 600 includes a display module 610, a setting module 620, and a configuration module 630.

The display module 610 is configured to display a first operable control, in response to a trigger instruction for a device in the automatic system from a user.

The setting module 620 is configured to set operation parameters of a pre-operation and/or a post-operation supported by the device, in response to an operation on the first operable control by the user.

The configuration module 630 is configured to configure a device node in a control process of the automatic system based on the operation parameters of the pre-operation and/or the post-operation. The pre-operation is configured to be executed by an execution device of the pre-operation before a device corresponding to the device node is controlled to execute a main operation. The post-operation is configured to be executed by an execution device of the post-operation after the device corresponding to the device node is controlled to perform a main operation.

According to another aspect of the present disclosure, an electronic device is further provided. FIG. 7 illustrates a schematic block diagram of an electronic device 700 according to an embodiment of the present disclosure. As shown in FIG. 7, the electronic device 700 may include a processor 710 and a memory 720. The memory 720 has computer program instructions stored therein. The computer program instructions, when being executed by the processor 710, perform the control method for the automatic system as described above.

According to another aspect of the present disclosure, a storage medium is provided, on which program instructions are stored. The program instructions, when being executed, perform the control method for the automatic system as described above. The storage medium may include, for example, a storage component of a tablet computer, a hard disk of a personal computer, a read-only memory (ROM), an erasable programmable read-only memory (EPROM), a portable compact disc read-only memory (CD-ROM), a USB memory, or any combination of the above mentioned storage media. The described computer-readable storage medium may be any combination of one or more computer-readable storage media.

Those skilled in the art can understand the specific implementations of the above-described control apparatus for the automatic system, the electronic device, and the storage medium, and the beneficial effects thereof by reading the above description relating to the control method for the automatic system. For the sake of brevity, no further details will be repeated herein.

Although the embodiments have been described herein with reference to the drawings, it should be understood that the above-described example embodiments are merely exemplary and are not intended to limit the scope of the present disclosure. Various changes and modifications may be made by those skilled in the art without departing from the scope and spirit of the present disclosure. All such changes and modifications are deemed to fall into the scope of the claims of the present disclosure.

Those skilled in the art may realize that the units and algorithm steps of each example described in conjunction with the embodiments disclosed herein can be implemented by electronic hardware, or a combination of computer software and electronic hardware. Whether these functions are performed in hardware or software depends on the specific application and design constraints of the technical solution. Those skilled in the art may use different methods to implement the described functions for each particular application, and such implementation should not be regarded as departing from the scope of the present disclosure.

It should be understood that the devices and methods disclosed in the embodiments of the present disclosure may be implemented in other manners. For example, the device embodiments described hereinabove are only schematic. For example, the division of the units is only based on logical functions, and there may be other division manners in actual implementation, such as multiple units or components may be combined or integrated into another device, or some features may be neglected or not executed.

In the specification provided herein, a lot of specific details are explained. However, it may be understood that the embodiments of the present disclosure may be practiced without these specific details. In some instances, well-known methods, structures and techniques are not shown in detail in order to avoid obscuring understanding of the specification.

Similarly, it should be understood that in order to simplify the present disclosure and facilitate understanding one or more of the various aspects of the disclosure, in the description of the exemplary embodiments of the present disclosure, the various features of the present disclosure are sometimes grouped together into a single embodiment, figure, or description thereof. However, the method according to the present disclosure should not be interpreted as reflecting the following intention: the claimed disclosure requires more features than those explicitly stated in each claim. More specifically, as reflected in the corresponding claims, the inventive point is that the corresponding technical problem can be solved with features fewer than all the features of a single embodiment being disclosed. Therefore, the claims following the detailed description are hereby expressly incorporated into the detailed description, where each claim itself serves as an independent embodiment of the present disclosure.

It can be understood by those skilled in the art that, except for mutually exclusive features, all features disclosed in this specification (including the claims, abstract and drawings) and all processes or units of any method or device disclosed in the specification can be combined in any way. Unless otherwise expressly stated, each feature disclosed in this specification (including the claims, abstract and drawings) may be replaced by an alternative feature that provides the same, equivalent or similar purpose.

In addition, it can be understood by those skilled in the art that, although some embodiments described herein include certain features included in other embodiments instead of other features, the combination of features of different embodiments is meant to be within the scope of the present disclosure and form different embodiments. For example, in the claims, any one of the claimed embodiments can be used in any combination.

The various component embodiments of the present disclosure may be implemented in hardware, or in software modules running on one or more processors, or in a combination thereof. It may be understood by those skilled in the art that a microprocessor or a digital signal processor (DSP) may be used in practice to realize some or all of the functions of some of the modules of the control apparatus for the automatic system according to the embodiments of the present disclosure. The present disclosure may alternatively be implemented as a program (such as a computer program and computer program product) for performing part or all of the methods described herein. Such a program implementing the present disclosure may be stored on a computer-readable medium, or may be in the form of one or more signals. Such a signal may be downloaded from an Internet website, or provided on a carrier signal, or provided in any other form.

It should be noted that the above embodiments illustrate rather than limit the present disclosure, and alternative embodiments may be designed by those skilled in the art without departing from the scope of the claims. In the claims, any reference symbol between parentheses shall not be construed as a limitation of the claims. The word "comprising" does not exclude the presence of elements or steps not listed in the claims. The word "a" or "an" preceding an element does not exclude the presence of multiple such elements. The present disclosure may be implemented by means of hardware comprising several different elements and by means of a suitably programmed computer. In a unit claim enumerating several apparatuses, several of these apparatuses may be embodied by a same hardware item. The use of the words "first", "second", "third" and the like does not indicate any order. These words may be interpreted as names.

Described above are only specific embodiments of the present disclosure or explanation for the specific embodiments of the present disclosure, and the protection scope of the present disclosure is not limited thereto. Any changes or alternations that can be easily envisaged by those skilled in the art within the technical scope disclosed in the present disclosure shall fall within the protection scope of the present disclosure. Therefore, the protection scope of the present disclosure shall be in accordance with the protection scope of the claims.

## Claims

1. A control method for an automatic system, comprising:
displaying a first operable control, in response to a trigger instruction for a device in the automatic system from a user;
setting operation parameters of a pre-operation and/or a post-operation supported by the device, in response to an operation on the first operable control by the user, wherein the pre-operation is to be performed by an execution device of the pre-operation before the device is controlled to perform a main operation, and the post-operation is to be performed by an execution device of the post-operation after the device is controlled to perform the main operation; and
configuring a device node in a control process of the automatic system based on the operation parameters of the pre-operation and/or the post-operation.

2. The control method for the automatic system according to claim 1, wherein the first operable control comprises a menu, and the menu is configured to provide the operation parameters of the pre-operation and/or the post-operation supported by the device for selection by the user.

3. The control method for the automatic system according to claim 1, further comprising:
parsing the control process into a series of sequentially arranged operations based on device node information and an order of device nodes in the control process, wherein the device node information comprises the operation parameters of the pre-operation and/or the post-operation;
determining, based on the parsed result, a device work division and an execution time corresponding to each operation of the sequentially arranged operations; and
performing the sequentially arranged operations based on the determined result.

4. The control method for the automatic system according to claim 3, wherein the determining, based on the parsed result, a device work division and an execution time corresponding to each operation of the sequentially arranged operations comprises:
determining, based on the parsed result, whether at least one operation of a post-operation of a device is identical to one operation of a pre-operation of a next device in the control process; and
for each operation of the at least one identical operation, determining a device work division and an execution time corresponding to the operation based on a corresponding pre-operation of a next device.

5. The control method for the automatic system according to claim 3, wherein the determining, based on the parsed result, a device work division and an execution time corresponding to each operation of the sequentially arranged operations comprises:
determining, based on the parsed result, whether a pre-operation and a post-operation of different devices in the control process are capable of simultaneous performance; and
determining the pre-operation and the post-operation capable of simultaneous performance to be performed simultaneously.

6. The control method for the automatic system according to any one of claims 1 to 5, further comprising:
displaying a user interface in response to a pre-operation and post-operation editing instruction from the user, wherein the user interface comprises an operation display area and a third operable control, the operation display area is configured to display all pre-operations and/or post-operations supported by a currently edited device, and the third operable control is configured to adjust, in response to the currently edited device configured with a plurality of pre-operations, an execution order of the plurality of pre-operations and/or to adjust, in response to the currently edited device configured with a plurality of post-operations, an execution order of the plurality of post-operations.

7. The control method for the automatic system according to any one of claims 1 to 5, wherein the displaying a first operable control, in response to a trigger instruction for a device in the automatic system from a user comprises:
displaying the first operable control, in response to a trigger operation on a device node in a constructed control process by the user.

8. The control method for the automatic system according to any one of claims 1 to 5, wherein the displaying a first operable control, in response to a trigger instruction for a device in the automatic system from a user comprises:
displaying a second operable control, wherein the second operable control is configured to set a device parameter of a device in the automatic system; and
displaying the first operable control, in response to an operation on the second operable control by the user.

9. The control method for the automatic system according to any one of claims 1 to 5, wherein the pre-operation and/or the post-operation comprises one or more of: sample plate-in, sample plate-out, sample plate orienting, door opening, and door closing.

10. A control apparatus for an automatic system, comprising:
a display module, configured to display a first operable control, in response to a trigger instruction for a device in the automatic system from a user;
a setting module, configured to set operation parameters of a pre-operation and/or a post-operation supported by the device, in response to an operation on the first operable control by the user; and
a configuration module, configured to configure a device node in a control process of the automatic system based on the operation parameters of the pre-operation and/or the post-operation,
wherein the pre-operation is to be performed by an execution device of the pre-operation before the device corresponding to the device node is controlled to perform a main operation, and the post-operation is to be performed by an execution device of the post-operation after the device corresponding to the device node is controlled to perform the main operation.

11. An electronic device, comprising a processor and a memory, wherein the memory stores computer program instructions, and the computer program instructions, when being executed by the processor, perform the control method for the automatic system according to any one of claims 1 to 9.

12. A storage medium, wherein the storage medium stores program instructions, and the program instructions, when being executed, perform the control method for the automatic system according to any one of claims 1 to 9.
